Europäisches Patentamt

European Patent Office

Office européen des brevets

(19)

(11) Veröffentlichungsnummer: **0 010 639**
**B1**

(12) **EUROPÄISCHE PATENTSCHRIFT**

(45) Veröffentlichungstag der Patentschrift: **22.06.83**

(51) Int. Cl.³: **F 24 D 19/02**

(21) Anmeldenummer: **79103792.2**

(22) Anmeldetag: **04.10.79**

(54) **Montageplatte mit oberseitig vorstehenden Halteteilen für die Heizrohre einer Fussbodenheizung.**

(30) Priorität: **04.11.78 DE 2847885**

(43) Veröffentlichungstag der Anmeldung:
**14.05.80 Patentblatt 80/10**

(45) Bekanntmachung des Hinweises auf die Patenterteilung:
**22.06.83 Patentblatt 83/25**

(84) Benannte Vertragsstaaten:
**AT BE CH FR GB IT NL SE**

(56) Entgegenhaltungen:
**DE - A - 2 733 361**
**DE - U - 7 441 716**
**DE - U - 7 806 984**
**DE - U - 7 913 311**

(73) Patentinhaber: **NORDROHR Kunststoffröhrenwerk GmbH & Co KG**
**Deichstrasse 6**
**D-2200 Elmshorn (DE)**

(72) Erfinder: **Lorenz, Hans-Joachim**
**Hauptstrasse 107**
**D-2082 Gross-Nordende (DE)**

(74) Vertreter: **Glawe, Delfs, Moll & Partner**
**Patentanwälte**
**Rothenbaumchaussee 58 Postfach 2570**
**D-2000 Hamburg 13 (DE)**

Courier Press, Leamington Spa, England.

## Montageplatte mit oberseitig vorstehenden Halteteilen für die Heizrohre einer Fußbodenheizung

Die Erfindung betrifft eine Montageplatte mit oberseitig vorstehenden Halteteilen, die mit einer nach oben offenen Ausnehmung jeweils eines Heizrohres einer Fußbodenheizung versehen sind, wobei die Halteteile besonders ausgeführt und mit einem unteren Steckansatz in Ausnehmungen der Platte einfügbar sind.

Es ist eine Montageplatte bekannt, die einstückig mit angeformten, nach oben zylindrisch vorspringenden Halteteilen versehen ist, zwischen denen die Heizrohre verlegt werden können (DE—C—1 929 529). Diese Halteteile müssen kleine Querabmessungen haben, wenn große Variabilität der Verlegemöglichkeiten gewünscht wird. Jedoch werden sie dann bei der Montage leicht beschädigt, weil die Platten während derselben begangen werden müssen. Um dem durch ausreichende Festigkeit der Halteteile entgegenzuwirken, ist man gezwungen, die Dichte des für diese Platten üblicherweise verwendeten Schaumpolystyrols beträchtlich zu erhöhen, wodurch der Preis unwirtschaftlich hoch werden kann.

Diese Nachteile werden durch eine Montageplatte mit gesondert ausgeführten Halteteilen der eingangs genannten Art teilweise vermieden (EP—A1 0000484 nach Artikel 54, 3 EPÜ). Die Halteteile gemäß Fig. 4 dieser Entgegenhaltung können in Ausnehmungen der Montageplatte eingesetzt werden, was erst kurz vor Montage der Rohre zu geschehen braucht und nur dort erforderlich ist, wo auchtatsächlich Rohre verlegt werden sollen. Dies gibt einerseits die Möglichkeit, die Halteteile aus festerem Werkstoff als die Montageplatte selbst herzustellen, so daß sie nicht so leicht beschädigt werden, wobei andererseits die vorsprungslose Platte wesentlich billiger herzustellen ist.

Diese vorbekannte Anordnung hat jedoch den Nachteil, daß sie nur verhältnismäßig geringe Kräfte aufzunehmen vermag, insbesondere wenn die Montageplatte aus einem verhältnismäßig leichten Schaumpolystyrol hergestellt ist, was aus Kostengründen günstig ist. Dies mag für die Anwendungen nicht stören, beidenen anschließend der Raum über der Montageplatte mit Zement ausgegossen wird, so daß ein Fußboden aus Zement mit darin eingebetteten Heizungsrohren geschaffen wird. In vielen Fällen, z.B. beim Fertigbau, wird jedoch der Fußboden nicht gegossen, es soll vielmehr eine Fußbodenplatte auf die Heizrohre gelegt werden. In diesem Falle sind die Halteteile der Entgegenhaltung wenig geeignet, die dabei auftretenen Kräfte aufzunehmen.

Der Aufgabe liegt daher die Erfindung zugrunde, Halteteile zu schaffen, die auch eine oberseitig aufgelegte Platte abstützen können, die an der Bildung des Fußbodens beteiligt ist.

Die erfindungsgemäße Lösung besteht darin, daß die Halteteile eine den unteren Steckansatz umgebende, zur Auflage auf der Montageplatte bestimmte Stützfläche aufweisen und im wesentlichen gleichmäßig über die Stützfläche verteilte, zur Abstützung einer aufgelegten Fußbodenplatte gleich hoch ausgebildete Vorsprünge tragen.

Durch die Stützfläche, die den unteren Steckansatz umgibt, wird die von der aufgelegten Fußbodenplatte ausgeübte Kraft auf einen größeren Bereich der Montageplatte verteilt, so daß dieselbe weicher sein kann, als dies ohne Stützansatz möglich wäre. Andererseits liegt die Fußbodenplatte nicht etwa auf dem Rohr auf, sondern auf Vorsprüngen, die gleichmäßig über die Stützfläche verteilt sind. Hierdurch werden die auftretenden Kräfte gleichmäßig verteilt, so daß eine Deformierung der Halteteile weitgehend vermieden werden kann.

Damit ein sicherer Sitz der Halteteile gewährleistet ist, können die Ausnehmungen in der Platte gegenüber dem Steckansatz der Halteteile Untermaß aufweisen, wodurch eine ausreichende Haftpressung zustande kommt.

Zweckmäßigerweise besitzen die Halteteile einen im wesentlichen zylindrischen unteren Steckansatz, damit ihre Richtung jeder beliebigen Rohrrichtung angepaßt werden kann. Zwar braucht die zugeordnete Platten-ausnehmung bei Verwendung eines zylindrischen Steckansatzes nicht unbedingt ebenfalls zylindrisch zu sein; die zylindrische Form der Plattenausnehmungen wird jedoch bevorzugt, damit eine möglichst große Kontaktund Reibungsfläche zwischen dem Steckansatz und der Leibung der Plattenausnehmung vorhanden ist, womit ebenfalls ein sicherer Sitz der Halteteile gewährleistet wird.

Um den sicheren Sitz der Halteteile zu gewährleisten, sollte auch der Durchmesser des Steckansatzes nicht zu klein sein. Der Steckansatz wird dabei zweckmäßigerweise kreisringförmig ausgebildet.

Die kreisringförmige Ausbildung des Steckansatzes hat bei entsprechend kreisringförmiger Ausbildung der Ausnehmungen in der Platte noch den weiteren Vorteil gegenüber kreisflächenförmigen, durchgehenden Löchern, daß der innerhalb der kreisringförmigen Plattenausnehmung stehenbleibende Kernteil für ausreichende Wärmedämmung unterhalb der Halteteile sorgt.

Die erfindungsgemäße vorsprungslose Platte hat den beträchtlichen Vorteil, daß sie oberseitig mit einer Aluminiumfolie zur zusätzlichen Wärmedämmung versehen sein kann. Zwar verdeckt diese Aluminiumfolie die vorgeformten Ausnehmungen in der Platte, so daß sie optisch nicht ohne weiteres erkennbar sind; sie lassen sich aber leicht mit den Händen ertasten, wenn die Ausnehmungen groß genug sind. Bei schmalen kreisringförmigen Ausnehmungen wäre dies etwas schwerer. Erfindungemäß kann deshalb vorgesehen sein, daß der Kernbereich innerhalb kreisringförmiger Ausnehmungen mit einer geringeren Höhe als das umgebende Plattenmaterial geformt wird.

Sehr häufig wird man die Ausnehmungen in der Platte vorformen und in dem üblichen Raster anordnen, das sich bei der Anordnung oberseitiger Plattenvorsprünge für die Verlegung von Heizrohren bewährt hat. Dies ist jedoch im Zusammenhang mit der Erfindung nicht unbedingt erforderlich, wenn die Unterkante des kreisförmigen Steckansatzes der Halteteile in bezug auf das Plattenmaterial schneidend ausgebildet is. Man kann den Steckansatz dann an beliebiger nicht vorgeformter Stelle der Platte unter leichter Drehung eindrücken, wobei er sich seine Halteausnehmung selbst schneidet. Dadurch erhält man unbegrenzt viele Möglichkeiten für die Rohrverlegung.

Ein vorteilhaftes Ausführungsbeispiel der Erfindung wird im folgenden näher unter Bezugnahme auf die Zeichnung erläutert. Darin zeigen:

Fig. 1 eine Draufsicht auf eine Gruppe von Montageplatten mit einem Darauf verlegten Heizrohr,

Fig. 2 einen Vertikalschnitt durch eine solche Anordnung im größeren Maßstab und

Fig. 3 und 4 einen Vertikalschnitt und eine Draufsicht auf ein erfindungsgemäßes Halteteil in etwa natürlicher Größe.

Die aus Schaumpolystyrol bestehenden Platten 1 weisen eine Vielzahl rasterförmig angeordneter Ausnehmungen 2 auf. Zur Festlegung eines auf den Platten verlegten Heizrohres 3 werden in die Ausnehmungen an geeigneten Stellen die Halteteile 4 eingesetzt, die das Rohr 3 festhalten und außerdem die von einer aufgelegten Fußbodenplatte einwirkende Kraft auf die Platten 1 übertragen. Zu diesem Zweck können außer den dargestellten Halteteilen noch weitere nur zur Kraftübertragung dienende, in der Zeichnung nicht dargestellte Halteteile oder beliebig anders geformte, auf die Platten 1 aufgelegte Distanzstücke vorgesehen sein.

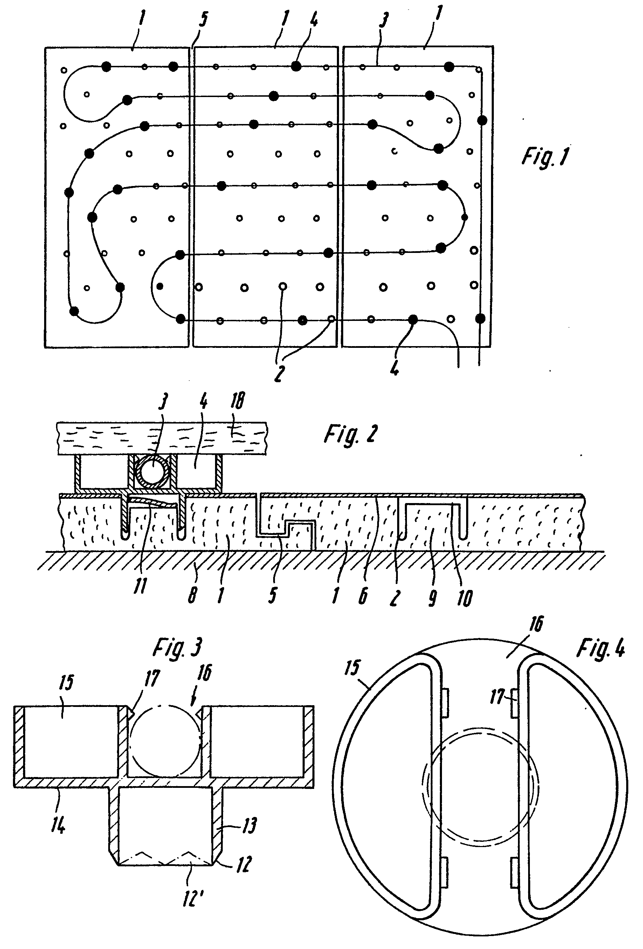

In Fig. 2 erkennt man zwei Platten 1 aus Schaumpolystyrol, die im Bereich der Fuge 5 in geeigneter Weise formschlüssig miteinander verriegelt sind. Sie tragen oberseitig eine dünne Aluminiumfolie 6, die in der Zeichnung übertrieben dick dargestellt ist. Die Platten liegen auf einem geeigneten Untergrund 8 vollflächig auf.

Im rechten Teil der Figure erkennt man im diametralen Schnitt durch eine Plattenausnehmung 2, daß diese kreisringförmig ausgebildet ist, wobei der stehenbleibende Kernteil 9 eine etwas geringere Höhe hat als das emgebende Plattenmaterial, so daß ein freier Raum 10 verbleibt, in welchem die Folie 6 sich unter dem Druck der tastenden Hand ein wenig nach unten durchbiegen kann, so daß die Ausnehmung auf diese Weise leicht ertastet werden kann.

Im linken Teil der Darstellung erkennt man einen in eine solche Ausnehmung eingesetzten Halteteil 4. Dieser hat beim Einsetzen die Folie 6 durchschnitten, so daß der Folienrest 11 nun irgendwie frei unterhalb des Halteteils liegt. Um die Folie besser durchdringen zu können und um im übrigen auch leicht in die ein gewisses Untermaß aufweisende Plattenausnehmung eingesetzt werden zu können, ist der Halteteil am unteren Rand 12 seines Steckansatzes 13 nach innen abgeschrägt, so daß sich einerseits eine Art Schneide und andererseits eine das Plattenmaterial beim Einführen nach außen verdrängende Schrägfläche ergibt. Die Schneide am Steckansatz gibt auch die Möglichkeit, diesen an beliebiger Stelle in die Platte einzudrehen, wenn ein Halteteil an einer Stelle gewünscht wird, an der sich zufälligerweise keine Plattenausnehmung befindet oder wenn eine Platte ohne Ausnehmungen verwendet wird. Um leichter in das Material eindringen zu können, kann die Schneide dann auch sägezahnförmig, wie bei 12' angedeutet, ausgebildet sein.

Der Durchmesser des Steckansatzes sollte im allgemeinen nicht kleiner als 20 mm sein und vorzugsweise in der Größenordnung vom 30 mm liegen, damit ausreichende Reibungskräfte übertragen werden können.

Der Steckansatz 13 wird von einer ebenen Stützfläche 14 des Halteteils umgeben, deren Größe ausreichend zur Kraftübertragung von dem darüber befindlichen Fußboden auf die Platte 1 bemessen ist. Zur Abstützung dieses Fußbodens (eine Fußbodenplatte 18 ist in Fig. 2 angedeutet) weist der Halteteil hochragende Vorsprünge auf, die im dargestellten Beispiel als Wände 15 ausgebildet sind. Diese lassen zwischen sich einer Ausnehmung 16 zur Aufnahme des Rohrs 3 frei, der Rastvorsprünge 17 zur elastischen Umklammerung des Rohrs trägt. Man erkennt in Fig. 4 daß die Wände 15 so verteilt sind, daß sich keine punktförmig konzentrierte Kraftübertragung an der Stützfläche 14 ergibt. Außerdem versteifen die Wände 15 die Stützfläche 14, so daß diese ohne wesentliche Biegung in ihrer ganzen Ausdehnung zur Kraftübertragung herangezogen werden kann.

**Patentansprüche**

1. Montageplatte (1) mit oberseitig vorstehenden Halteteilen (4), die mit einer nach oben offenen Ausnehmung (16) zur Aufnahme jeweils eines Heizrohres (3) einer Fußbodenheizung versehen sind, wobei die Halteteile (4) gesondert ausgeführt und mit einem unteren Steckansatz (13) in Ausnehmungen (2) der Platte (1) einfügbar sind, dadurch gekennzeichnet, daß die Halteteile (4) eine den unteren Steckansatz (13) umgebende, aur Auflage auf der Montageplatte (1) bestimmte Stützfläche (14) aufweisen und im wesentlichen gleichmäßig über die Stützfläche (14) verteilte, zur Abstützung einer aufgelegten Fußbodenplatte (18) gleich hoch ausgebildete Vorsprünge (15) tragen.

2. Montageplatte (1) mit Halteteilen (4) nach Anspruch 1, dadurch gekennzeichnet, daß die Ausnehmungen (2) in der Platte (1) gegenüber dem unteren Steckansatz (13) der Halteteile (4) Untermaß aufweisen.

3. Montageplatte (1) mit Halteteilen (4) nach Anspruch 1 oder 2, dadurch gekennzeichnet, daß der untere Steckansatz (13) und die Ausnehmungen (2) der Platte (1) zylindrisch ausgebildet sind.

4. Montageplatte (1) mit Halteteilen (4) nach Anspruch 1 oder 2, dadurch gekennzeichnet, daß der untere Steckansatz (13) und die Ausnehmungen (2) in der Platte (1) kreisringförmig ausgebildet sind.

5. Montageplatte (1) mit Halteteilen (4) nach Anspruch 4, dadurch gekennzeichnet, daß der von den kreisringförmigen Ausnehmungen (2) in der Platte (1) jeweils umgebene Kernteil (9) eine geringere Höhe als das die Ausnehmungen (2) umgebende Plattenmaterial hat.

6. Montageplatte (1) mit Halteteilen (4) nach Anspruch 4 oder 5, dadurch gekennzeichnet, daß die Unterkante (12) des kreisringförmigen Steckansatzes (13) in bezug auf das Plattenmaterial schneidend ausgebildet ist und die Ausnehmungen (2) in der Platte (1) nicht vorgeformt sind.

**Revendications**

1. Plaque de montage (1) comportant, en saillie sur sa face supérieure, des éléments de maintien (4) qui présentent une cavité (16) ouverte vers le haut pour recevoir chacun un tuyau de chauffage (3) d'une installation de chauffage du sol, les éléments de maintien (4) étant fabriqués séparément et pouvant être insérés par une saillie inférieure d'enfilage (13) dans des cavités (2) de la plaque (1), caractérisée en ce que les éléments de maintien (14) présentent une surface d'appui (14) qui entoure la saillie inférieure d'enfichage (13) et qui est destinée à l'appui sur la plaque de montage (1) et en ce qu'ils portent des saillies (15) formées avec une hauteur égale, réparties de manière pratiquement uniforme sur toute l'étendue de la surface d'appui (14), pour servir de support à une dalle (18) posée par dessus.

2. Plaque de montage (1) à éléments de maintien (4) selon la revendication 1, caractérisée en ce que les cavités (2) pratiquées dans la plaque (1) présentent un sous-dimensionnement par rapport à la saillie inférieure d'enfichage (13) des éléments de maintien (4).

3. Plaque de montage (1) à éléments de maintien (4) selon la revendication 1 ou 2, caractérisée en ce que la saillie inférieure d'enfichage (13) et les cavités (2) pratiquées dans la plaque (1) sont réalisées avec une forme cylindrique.

4. Plaque de montage (1) à éléments de maintien (4) selon la revendication 1 ou 2, caractérisée en ce que la saillie inférieure d'enfichage (13) et les cavités (2) pratiquées dans la plaque (1) sont réalisées avec une forme d'anneau circulaire.

5. Plaque de montage (1) à éléments de retenue (4) selon la revendication 4, caractérisée en ce que la partie centrale (9) entourée par chacune des cavités en anneau circulaire (2) pratiquées dans la plaque (1) a une hauteur inférieure à celle de la matière de la plaque entourant les cavités (2).

6. Plaque de montage (1) à éléments de retenue (4) selon la revendication 4 ou 5, caractérisée en ce que l'arête inférieure (12) de la saillie d'enfichage en anneau circulaire (13) est tranchante relativement à la matière de la plaque et en ce les cavités (2) dans la plaque (1) ne sont pas préformées.

**Claims**

1. A mounting plate (1) with retaining parts (4) which project from the top thereof and which are provided with a recess (16), which is open at the top, for the reception of respectively one heating tube (3) of an underfloor heating system, the retaining parts (4) being separately constructed and being insertable, with the aid of a lower plug-in lug (13), into recesses (2) in the plate (1), characterised in that the retaining parts (4) have a supporting surface (14), which surrounds the lower plug-in lug (13) and is intended for resting on the mounting plate (1), and carry projections (15) which are substantially uniformly distributed over the supporting surface (14) and are designed so as to be of equal height for supporting a floor plate (18).

2. A mounting plate (1) with retaining parts (4) as claimed in Claim 1, characterised in that the recesses (2) in the plate (1) are smaller in dimension than the lower plug-in lug (13) of the retaining parts (4).

3. A mounting plate (1) with retaining parts (4) as claimed in Claim 1 or 2, characterised in that the lower plug-in lug (13) and the recesses (2) in the plate (1) are designed so as to be cylindrical.

4. A mounting plate (1) with retaining parts (4) as claimed in Claim 1 or 2, characterised in that the lower plug-in lug (13) and the recesses (2) in the plate (1) are designed so as to be circular-ring-shaped.

5. A mounting plate (1) with retaining parts (4) as claimed in Claim 4, characterised in that the core part (9), which is respectively surrounded by the circular-ring-shaped recesses (2) in the plate (1), has a height that is lower than the plate material surrounding the recesses (2).

6. A mounting plate (1) with retaining parts (4) as claimed in Claim 4 or 5, characterised in that the lower edge (12) of the circular-ring-shaped plug-in lug (13) is designed so as to be cutting with respect to the plate material and in that the recesses (2) in the plate (1) are not preformed.

0 010 639

Fig. 1

Fig. 2

Fig. 3

Fig. 4